# EUROPEAN PATENT APPLICATION

(11) **EP 3 528 580 A1**
(43) Date of publication of application: **21.08.2019**
(21) Application number: 18157482.3
(22) Date of filing: 19.02.2018
(51) Int. Cl.: H04W 74/00, H04W 76/27

(54) **OPERATION IN SYNCHRONIZATION LOSS WITH CELL IN A MOBILE COMMUNICATION SYSTEM**

(71) Applicant: Nokia Technologies Oy, 02610 Espoo (FI)
(72) Inventor: DALSGAARD, Lars, 90230 Oulu (FI); VIRTEJ, Elena, 02100 Espoo (FI); HENTTONEN, Tero, 02760 Espoo (FI); KOLEHMAINEN, Niko, 02420 Jorvas (FI)
(74) Representative: TBK

(57) **Abstract**

In case a state of a cell of an access network of a mobile communication system is changed to a second state and a first timer of a user equipment is running, the user equipment performs channel quality reporting with respect to the cell (S110), and in case the state of the cell is the second state, when the first timer expires (Yes in S120), stops the channel quality reporting (S130).

## Description

### TECHNICAL FIELD

The present invention relates to cellular radio implementation comprising 2G, 3G, 4G and 5G radio access network, cellular IoT (Internet of Things) RAN (Radio Access Network) and cellular radio hardware. In particular, the present invention relates to operation in synchronization loss with a cell of an access network, e.g. a secondary cell (SCell).

### BACKGROUND

The background of this invention is related to CA/DC (Carrier Aggregation/Dual Connectivity) in LTE (Long Term Evolution) and reducing SCell setup delay for improved/faster CA/SCell utilization for better user experience. The background is not limited to LTE and is related also to NR (New Radio)/5G (Generation 5).

In LTE specifications, measurement procedures and requirements in UE idle and connected modes are defined.

When an UL timing advance timer (TAT, also referred to as time alignment timer in the following) expires, the UE automatically releases any configured PUCCH (Physical Uplink Control Channel) and SRS (Sounding Reference Signals) resources of a corresponding MAC entity/CellGroup (CG). This means that the UE is no longer able to transmit in UL in that CG until UL timing advance can be re-established, which requires a successful RACH procedure.

### SUMMARY

To reduce cell (e.g. SCell) setup delay, there is a cell state (e.g. an SCell state) (which is referred to in the following as "suspended cell", e.g. "suspended SCell", or second state), which is an additional state to cell states (e.g. SCell states) of "activated cell" (e.g. "activated SCell") (also referred to as first state) and "deactivated cell" (e.g. "deactivated SCell") (also referred to as third state). In the suspended cell, there is no downlink channel monitoring (e.g. PDCCH (Physical Downlink Control Channel) monitoring) between user equipment/device and access network, but channel quality reporting (e.g. CQI (Channel Quality Identifier) reporting) based on e.g. CRS (Cell-specific Reference Signal) and RRM (Radio Resource Management) measurements continues according to RRC (Radio Resource Control) configuration. Alternatively, measurements can be performed according to a DRX cycle of a PCell.

It is to be noted that, while the problem is described with respect to LTE, it is not limited thereto and may similarly arise for NR/5G.

A problem with the suspended cell of the access network may be that in case a cell on which channel quality reporting is performed (e.g. PCell (Primary Cell)) is no longer UL (Uplink) timing synchronized, operation of UE (User Equipment) (UE behavior) is undefined. Additionally, it is undefined how the UE behavior and suspended cells are treated once the UL timing synchronization is re-gained.

According to some embodiments of the invention, a method, an apparatus and a computer-readable storage medium are provided as defined in the appended claims.

Some embodiments of the invention define conditions, when a transition from suspended cell state to deactivated cell state and vice versa takes place and how the transition is done on UE side.

According to some embodiments, once the UL synchronization is lost on the UE side, e.g. when a UL timing advance timer (TAT) (also referred to as first timer) expires, the UE considers any cell in suspended cell state as being deactivated and no longer performs channel quality reporting.

Alternatively, according to some embodiments, the suspended cell state is kept, when the first timer expires, as long as a second timer, e.g. an "SCell desync timer", is running. If the second timer expires the cell is considered as deactivated.

According to some embodiments, once the UL timing is regained the UE commences procedure for suspended cell and re-starts measurements and channel quality reporting accordingly.

According to some embodiments, an eNB of the access network knows the UE state transition behavior. Hence, the eNB also knows which PUCCH format to receive from the UE.

In the following the invention will be described by way of embodiments thereof with reference to the accompanying drawings.

### BRIEF DESCRIPTION OF THE DRAWINGS

Fig. 1 shows a flowchart illustrating a process executable by a user equipment/device according to some embodiments of the invention.
Fig. 2 shows a schematic block diagram illustrating a configuration of a control unit in which examples of embodiments of the invention are implementable.
Fig. 3 shows a flowchart illustrating a process according to some embodiments of a first example implementation of the invention.
Fig. 4 shows a flowchart illustrating a process according to some embodiments of a second example implementation of the invention.

### DESCRIPTION OF THE EMBODIMENTS

According to some embodiments, a cell (e.g. an SCell) of an access network of a mobile communication network, which serves a UE/device attaching to the mobile communication network, can take states of activated state, deactivated state and suspended state.

Even though LTE CA/DC is used as an example technology, further releases or future radio technologies may be applicable as well (e.g. new radio (NR) and beyond, e.g. form of NR CA/NR DC (e.g. EN-DC (E-UTRAN (UMTS (Universal Mobile Telecommunications System) Terrestrial Radio Access Network) New Radio - Dual Connectivity)) or multi-connectivity (MC)) approaches can be utilized.

In activated state, the UE (User Equipment, covering also a device according to IoT (Internet of Things)) monitors a downlink channel, e.g. PDCCH, reports channel quality, e.g. CQI, and performs RRM measurements according to RRC configuration. The UE may have DRX (Discontinuous Reception) assigned according to per-UE DRX configuration. For example, all SCells use the same DRX configuration.

In deactivated state, the UE does not perform downlink channel (e.g. PDCCH) monitoring or channel quality (e.g. CQI) reporting. According to some embodiments, RRM measurements continue according to a "deactivated cell measurement cycle", which is a form of DRX for RRM measurements.

In suspended state, the UE does not perform downlink channel (e.g. PDCCH) monitoring, but channel quality (e.g. CQI) reporting based on e.g. CRS and RRM measurements continue according to RRC configuration. Alternatively, according to some embodiments, the UE performs measurements according to a DRX cycle of another serving cell, e.g. a PCell.

In order to shorten cell configuration and activation delay, the UE may be configured with a cell directly in active state. For example, the configured cell is regarded as activated upon configuration (if indicated) and it is then not necessary to explicitly activate the deactivated cell using MAC (Medium Access Control) command. In doing so it is possible to skip an intermediate state.

In addition, in order to shorten cell access delay from deactivated to activated state, e.g. in a case when the cell would be deactivated and would need to be activated e.g. due to traffic (re)start again (either MO/MT originated), the suspended cell state has been introduced.

In the suspended cell state, the UE may perform RRM measurements according to PCell and channel quality (e.g. CQI) measurements are performed and reported to the access network (e.g. periodic CQI). Once the cell on which the CQI reporting is performed (e.g. PCell) is no longer UL timing synchronized, UE behavior (e.g. operation of the UE) is undefined. Additionally, it is undefined how the UE behaviour (e.g. operation of the UE) and suspended cells are treated once the UL timing synchronization is re-gained.

According to some embodiments, the access network is able to indicate whether the UE should automatically trigger state transition from suspended state to deactivated state during UL synchronization loss, and whether any timers running in suspended state should be advanced during any such time. The transition from suspended to deactivated state may also happen immediately or after some time, e.g. the transition may be guided by a timer that prevents immediate transition but moves the cell to deactivated state if TA (Time Alignment) is not re-established quickly.

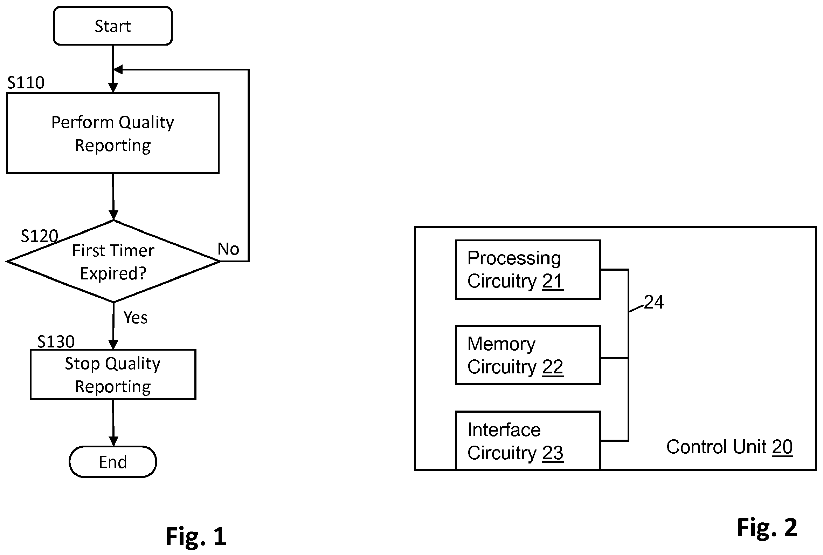

Fig. 1 shows a flowchart illustrating a process executable by a UE/device according to some embodiments.

In step S110, it is assumed that a state of a cell of an access network of the mobile communication system has changed to a second state (e.g. suspended state) in which the UE/device performs channel quality reporting with respect to the cell, when a first timer (e.g. TAT) is running. The state of the cell may have changed to the second state from a first state (e.g. active state), in which the UE/device performs monitoring on a downlink channel with respect to the cell and performs the channel quality reporting. In the second state, the UE/device does not perform the monitoring on the downlink channel. The UE/device may acquire from the monitored downlink channel, e.g. from DCI (Downlink Control Information), that the cell has changed from the first state to the second state. Alternatively or in addition, state transitions are performed e.g. by MAC CE (MAC Control Element) which indicates to the UE/device which state transition to perform (here from activated state to suspended state). Further, state transitions may be performed using a timer, e.g. expiration of a timer associated with the activated state triggers transition from activated state to suspended state.

In step S120 it is checked whether or not the first timer has expired while the state of the cell is the second state.

In case the first timer has not expired (No in step S120), the process returns to step S110. Otherwise, in case the first timer has expired (Yes in step S120), in step S120 the UE/device stops the channel quality reporting.

According to some embodiments, the UE/device includes and/or uses a control 20 as shown in Fig. 2. The control unit 20 comprises processing circuitry 21, memory circuitry 22 and interface circuitry 23, which are coupled via a link 24.

In general, the various embodiments may be implemented in hardware or special purpose circuits, software (computer readable instructions embodied on a (non-transitory) computer readable medium), logic or any combination thereof. For example, some aspects may be implemented in hardware, while other aspects may be implemented in firmware or software which may be executed by a controller, microprocessor or other computing device, although the invention is not limited thereto.

Further, as used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

According to some embodiments of a first example implementation, once the UL synchronization is lost on the UE side (e.g. when the UL timing advance timer, TAT, expires in step S120), in step S130 the UE/device considers any cell (e.g. SCell) in suspended state (second state) hereafter as being deactivated. In other words, when the first timer expires, the UE/device determines that the state of the cell is a third state. The UE/device no longer needs to fulfil suspended cell requirements e.g. performing (CRS based) channel quality (e.g. CQI) measurements. Since the UE/device no longer has any PUCCH resources configured (e.g. the UL TAT expiry releases those), this does not create a problem for PUCCH format comprehension at access network (eNB) side.

Alternatively, according to some embodiments of a second example implementation, when the TAT (first timer) expires, in step S130 the UE/device determines the suspended cells to be in suspended state (i.e. the suspended cells are kept in suspended state). Once the UL timing is regained the UE/device commences the procedures for suspended cell and re-starts measurements and channel quality (e.g. CQI) reporting accordingly. Since the eNB knows the UE state transition behavior, it also knows which PUCCH format to receive.

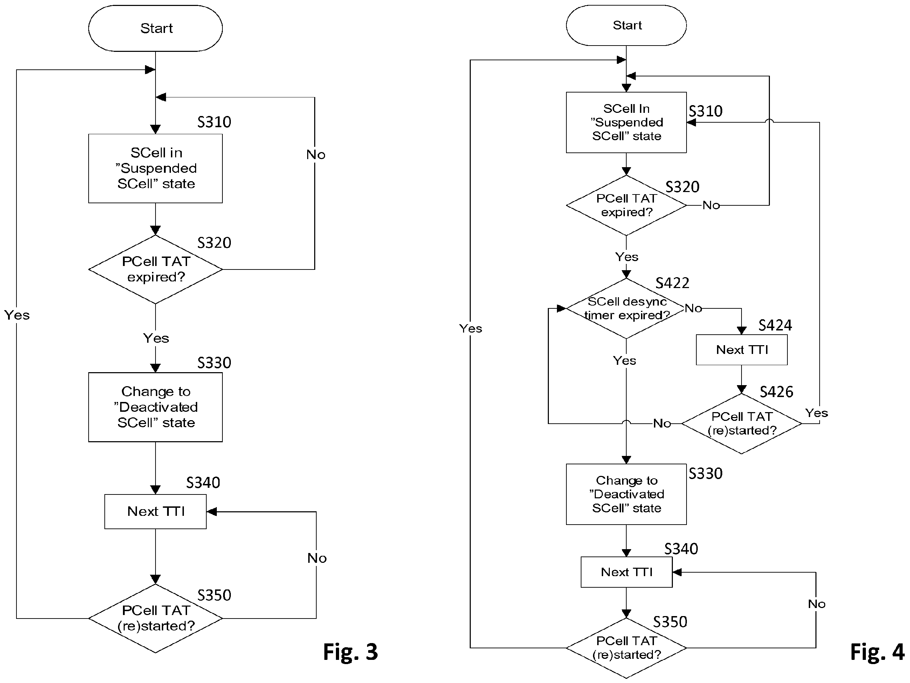

According to some embodiments of the second example implementation, if the cell suspended state is conserved during the time when UL synchronization is not valid, a suspended state timer (second timer; a timer guarding how long a cell is in suspended state, called "Scell desync timer" in Fig. 4) is put on hold or is stopped. Once the UL synchronization is regained, the second timer is either re-started (from previous value) or started again (from initial value). Whether either option is chosen may be fixed or indicated by the access network (e.g. eNB) within configuration.

According to some embodiments, operation of the UE/device is network configurable. For example, the access network (e.g. eNB) indicates to the UE/device whether suspended cell re-gains suspended state status once UL timing is re-acquired or whether suspended cell is transitioned to deactivated state once the UL timing synchronization is lost. The configuration may be part of suspended cell initial configuration or part of MAC CE that triggers the state transition to suspended cell state.

According to some embodiments, the UE/device is configured to trigger a cell transition away from suspended state when the uplink synchronization timer (e.g. Time Alignment Timer - TAT, first timer) expires. Transitioning away from suspended state after UL synchronization expiry leads to the cell entering deactivated state, which allows the cell to not be immediately deactivated but only after a while if the TA is not re-established soon, which may happen if UE is kept in RRC_CONNECTED but data traffic is not needed.

In the suspended (i.e. fast activation) cell state, the UE/device may be consuming more power than in the case of deactivated cell state. In order to achieve the best benefits from the suspended cell state, this state should be used with care and cells should only be in that state for limited period of time. According to some embodiments, in the suspended state, the UE/device performs frequent RRM measurements and reports periodically the CQI for the suspended cell e.g. via PCell. As described above, operation of the UE/device once the UL timing synchronization is lost is undefined. In some cases, the UE/device may continue to be without UL synchronization for a while, and cells in suspended state may cause extra power consumption impact.

According to some embodiments, smart handling of suspended cells with possibility of smart re-entering of cells to suspended state once the UL timing synchronization is re-gained is enabled, optimizing cell usage by reducing cell setup delay.

According to some embodiments, the UE/device transitions suspended cells either to deactivated or dormant state when UL synchronization is lost and possibly transitions the dormant suspended cells back to suspended state or active cell state when UL synchronization is re-acquired.

According to some embodiments, the second timer is linked to the UE UL synchronization timer (TAT) or alternatively another timer, and can be controlled by the (access) network and can be controlled on MAC level as well.

Fig. 3 shows a flowchart of a process of the first example implementation according to some embodiments, in which no timer (i.e. in this example no second timer) for controlling an SCell state transition to deactivated SCell state is provided.

Fig. 4 shows a flowchart of a process of the second example implementation according to some embodiments, in which a timer (second timer) is provided that controls transition from suspended SCell state to deactivated Scell state.

Referring to Fig. 3, in case cell (e.g. SCell) state is changed to suspended state and TA timer (first timer) is running as indicated in S310, the UE/device performs channel quality (e.g. CQI) reporting.

In case the SCell state is the suspended state and the TA timer expires at the UE/device (Yes in S320), in step S330 the SCell state changes to deactivated state and the UE/device stops channel quality (e.g. CQI) reporting. In case the TA timer does not expire in S320, the process returns to S310.

In case the TA timer is started or restarted after next TTI (Transmission Time Interval) in step S340 (Yes in step S350), the process returns to step S310 and the SCell state changes to suspended state. In case the TA timer is not started or restarted in step S350, the process returns to S340.

Referring to Fig. 4, steps S310, S320, S330, S340 and S350 correspond to the steps indicated by same reference signs, described with respect to Fig. 3. However, in case the SCell state is the suspended state and the TA timer expires at the UE/device (Yes in S320), the SCell state is still the suspended state but the UE/device stops channel quality (e.g. CQI) reporting, and the process advances to step S422.

In step S422, it is checked whether or not a suspended state timer ("SCell desync timer"; second timer) which keeps running in the example shown in Fig. 4 expires. If the second timer expires (Yes in S422), the process proceeds to S330 and the SCell is deactivated. If the second timer does not expire in S422, the process proceeds to S424.

After a TTI in S424, if the TA timer (first timer) is started/restarted again (Yes in S426), the process returns to S310 and the SCell state changes to suspended state. If the TA timer is not started/restarted again in S426, the process returns to S422.

According to some embodiments, alternatively to steps S422, SS424, S426, the suspended state timer (second timer) is put on hold or is stopped. Once the TA timer (first timer) is (re-)started, the suspended timer continues or (re-)starts and the UE/device performs channel quality (e.g. CQI) reporting. The SCell is kept in suspended state.

According to some embodiments, the operation by the UE/device according to the first and second example implementations and the processes of Figs. 3 and 4 is configured by the access network (e.g. eNB).

According to some embodiments, the suspended cell (e.g. suspended SCell) state does not compromise UE/device power consumption, since the UE is not required to measure cell channel quality (e.g. SCell CQI) unless the UL sync is kept.

According to some embodiments, the UE/device can fall back to normal deactivated cell (e.g. deactivated SCell) requirements including measurement performance (e.g. based on measCycleScell).

According to some embodiments, fast re-entering of deactivated cell (e.g. deactivated SCell) to suspended cell (e.g. suspended SCell) state is enabled without need of network signaling needed.

According to some embodiments, network control of UE/device behavior is enabled.

According to some embodiments, balance between power consuming suspended cell state (e.g. suspended SCell state) and low-power deactivated cell state) (e.g. deactivated SCell state) can be achieved.

According to some embodiments, re-entering deactivated cells (e.g. deactivated SCells) to suspended cell state (e.g. suspended SCell state) once the UL timing synchronization is re-gained is enabled.

According to some embodiments, the cell (e.g. SCell) state can be changed without network signaling.

According to some embodiments, an apparatus of a mobile communication system is provided, that may include and/or use the control unit 20 shown in Fig. 1, and/or may execute the process shown in Fig. 1. The apparatus may comprise a user equipment and/or a device according to IoT.

According to some embodiments, the apparatus comprises means for,in case a state of a cell of an access network of the mobile communication system is changed to a second state and a first timer is running, performing channel quality reporting with respect to the cell, and means for, in case the state of the cell is the second state, when the first timer expires, stopping the channel quality reporting.

According to some embodiments, the apparatus comprises means for, in case the state of the cell is the second state, when the first timer is restarted, resuming the channel quality reporting.

According to some embodiments, the apparatus comprises means for, when the first timer expires, determining that the state of the cell is a third state. According to some embodiments, when the first timer is restarted, the means for determining determines that the state of the cell is the second state.

Alternatively, according to some embodiments, the apparatus comprises means for stopping, when the first timer expires, a second timer counting a time period during which the cell is in the second state, and means for, when the first timer is restarted, restarting the second timer.

Alternatively, according to some embodiments, the apparatus comprises means for not stopping a second timer counting a time period during which the cell is in the second state when the first timer has expired, and means for, when the second timer expires, determining that the state of the cell is a third state. According to some embodiments, when the first timer is restarted, the means for determining determine that the state of the cell is the second state.

According to some embodiments, the apparatus comprises means for receiving configuration information causing the apparatus to perform at least one of determining the state of the cell, and stopping/restarting the second timer.

According to some embodiments, the first timer comprises a timing advance timer indicating uplink synchronization between the apparatus and the access network.

According to some embodiments, a first state of the cell is an active state in which the apparatus performs monitoring on a downlink channel with respect to the cell and performs the channel quality reporting, the second state of the cell is a suspended state in which the apparatus does not perform the monitoring on the downlink channel with respect to the cell and performs the channel quality reporting, and the third state of the cell is a deactivated state in which the apparatus no longer performs channel quality reporting.

According to some embodiments, the apparatus comprises means for performing radio resource measurements in the first, second and third states of the cell.

It is to be understood that the above description is illustrative of the invention and is not to be construed as limiting the invention. Various modifications and applications may occur to those skilled in the art without departing from the scope of the invention as defined by the appended claims.

## Claims

1. A method for use by a user equipment of a mobile communication system, the method comprising:
in case a state of a cell of an access network of the mobile communication system is changed to a second state and a first timer is running, performing channel quality reporting with respect to the cell; and
in case the state of the cell is the second state, when the first timer expires, stopping the channel quality reporting.

2. The method of claim 1, comprising:
when the first timer expires, determining that the state of the cell is a third state.

3. The method of claim 1, comprising:
stopping, when the first timer expires, a second timer counting a time period during which the cell is in the second state; and
when the first timer is restarted, restarting the second timer.

4. The method of claim 1, comprising:
not stopping a second timer counting a time period during which the cell is in the second state when the first timer has expired; and
when the second timer expires, determining that the state of the cell is a third state.

5. The method of claim 2 or 4, comprising:
when the first timer is restarted, determining that the state of the cell is the second state.

6. The method of any one of claims 1, 3 or 5, comprising:
in case the state of the cell is the second state, when the first timer is restarted, resuming the channel quality reporting.

7. The method of any one of claims 1 to 6, comprising:
receiving configuration information causing at least one of the following:
determining the state of the cell; and
stopping/restarting the second timer.

8. The method of any one of claims 1 to 7, wherein the first timer comprises a timing advance timer indicating uplink synchronization between the user equipment and the access network.

9. The method of any one of claims 1 to 8, wherein a first state of the cell is an active state in which the user equipment performs monitoring on a downlink channel with respect to the cell and performs the channel quality reporting, the second state of the cell is a suspended state in which the user equipment does not perform the monitoring on the downlink channel with respect to the cell and performs the channel quality reporting, and the third state of the cell is a deactivated state in which the user equipment no longer performs channel quality reporting.

10. A computer-readable medium storing a program for a computer, the program comprising software code portions for performing the steps of any one of claims 1 to 9 when the program is run on the computer.

11. An apparatus of a mobile communication system, the apparatus comprising at least one processor and at least one memory including computer program code, the at least one memory and the computer program code configured to, with the at least one processor, cause the apparatus at least to perform:
in case a state of a cell of an access network of the mobile communication system is changed to a second state and a first timer of the apparatus is running, performing channel quality reporting with respect to the cell; and
in case the state of the cell is the second state, when the first timer expires, stopping the channel quality reporting.

12. The apparatus of claim 11, wherein the at least one memory and the computer program code are configured to, with the at least one processor, cause the apparatus to further perform at least one of the following:
when the first timer expires, determining that the state of the cell is a third state; and
when the first timer is restarted, determining that the state of the cell is the second state; and
in case the state of the cell is the second state, when the first timer is restarted, resuming the channel quality reporting.

13. The apparatus of claim 11, wherein the at least one memory and the computer program code are configured to, with the at least one processor, cause the apparatus to further perform at least one of the following:
stopping, when the first timer expires, a second timer of the apparatus which counts a time period during which the cell is in the second state; and
when the first timer is restarted, restarting the second timer; and
in case the state of the cell is the second state, when the first timer is restarted, resuming the channel quality reporting.

14. The apparatus of claim 11, wherein the at least one memory and the computer program code are configured to, with the at least one processor, cause the apparatus to further perform at least one of the following:
not stopping a second timer counting a time period during which the cell is in the second state when the first timer has expired; and
when the second timer expires, determining that the state of the cell is a third state; and
when the first timer is restarted, determining that the state of the cell is the second state; and
in case the state of the cell is the second state, when the first timer is restarted, resuming the channel quality reporting.

15. The apparatus of any one of claims 11 to 14, wherein the at least one memory and the computer program code are configured to, with the at least one processor, cause the apparatus to further perform:
receiving configuration information causing the apparatus to perform at least one of the following:
determining the state of the cell; and
stopping/restarting the second timer.
